# EUROPEAN PATENT APPLICATION

(11) **EP 1 796 417 A2**
(43) Date of publication of application: **13.06.2007**
(21) Application number: 06125178.1
(22) Date of filing: 30.11.2006
(51) Int. Cl.: H04Q 7/38

(54) **Mobile radio system and mobile radio channel assigning method**

(30) Priority: 09.12.2005 JP 2005356273
(71) Applicant: FUJITSU LIMITED, Kawasaki-shi, Kanagawa 211-8588 (JP)
(72) Inventor: Sawada, Kensuke, c/o FUJITSU LIMITED, Kawasaki-shi, Kanagawa 211-8588 (JP); Ushiki, Kazumasa, c/o FUJITSU LIMITED, Kawasaki-shi, Kanagawa 211-8588 (JP); Fukazawa, Mitsunori, c/o FUJITSU LIMITED, Kawasaki-shi, Kanagawa 211-8588 (JP); Murakami, Hirokazu, c/o FUJITSU LIMITED, Kawasaki-shi, Kanagawa 211-8588 (JP)
(74) Representative: Hitching, Peter Matthew

(57) **Abstract**

A mobile radio system conducts radio communications between a base station and a plurality of mobile stations, as well as among a plurality of mobile stations. The system uses a mobile radio channel assignment method, where each mobile station (1) is capable of acquiring position information of the current position of the mobile station, as well as assigning a frequency channel for radio communications. The mobile station transmits and receives information using the assigned frequency channel, corresponding to the acquired position information.

## Description

The present invention relates to a mobile radio system for radio communications among a plurality of mobile stations, radio communications between a plurality of mobile stations and a base station, and a mobile radio channel assigning method.

As a communication system, a variety of systems have already been proposed, including multiple communication systems with requirements for multiple accesses by a plurality of stations. For example, communication systems which uses TDMA (Time Division Multiple Access), FDMA (Frequency Division Multiple Access), CSMA (Carrier Sense Multiple Access), CDMA (Code Division Multiple Access), OFDMA (Orthogonal Frequency Division Multiple Access) or the like are also known and are applied to mobile radio communications. Moreover, a system for radio communications among various mobile stations, as well as between a base station and a plurality of mobile stations is also known.

In addition, in a portable phone system, channels are assigned to each portable phone from a base station side by distributing a plurality of base stations, so as to provide partially overlapping service areas and enabling communications with other portable phones or fixed telephones via the base station, while a user carrying the portable phone is moving. Moreover, a control method has also been proposed, in which a mobile station issues a channel assignment request, using a common channel, to the base station on the basis of the CSMA/CA system, and the base station schedules the transmission time on the basis of the TDMA system (for example, refer to Japanese published application JP-A No. 2002-374265). In addition, a system and a control method have also been proposed, in which a beacon region for transmitting respective beacon packets from a plurality of master stations (base stations), a TDMA region in which the permitted particular stations can use a frequency band assigned on a time division basis, and a CSMA region, in which competitive access is possible, are periodically divided on the time axis for selecting a region to ensure the frequency band (for example, refer to Japanese Published application JP-A No. 2005-73240).

For example, it has been considered to apply the CSMA system, in which respective mobile stations select idle channels, to radio communications between the base stations distributed to the essential locations such as an intermediate point, branching point, or intersecting point, or the like, of the moving path of mobile stations, or to a center area, or the like, of the event site to which many persons carrying a plurality of mobile stations gather and a plurality of mobile stations moving outside the service areas of the base stations, It has also been considered to realize radio communications through channel designation from the base station side between the base stations and a plurality of mobile stations moving into the service areas of the base stations. In radio communications among mobile stations and radio communications between base stations and mobile stations, since common use of a radio frequency band is possible in identical frequency bands, an economical apparatus structure can be realized. In such a mobile communication system, channel distribution control, for example, is necessary so that radio communications betweens a base station and mobile stations and radio communications among mobile stations can be free from mutual interference.

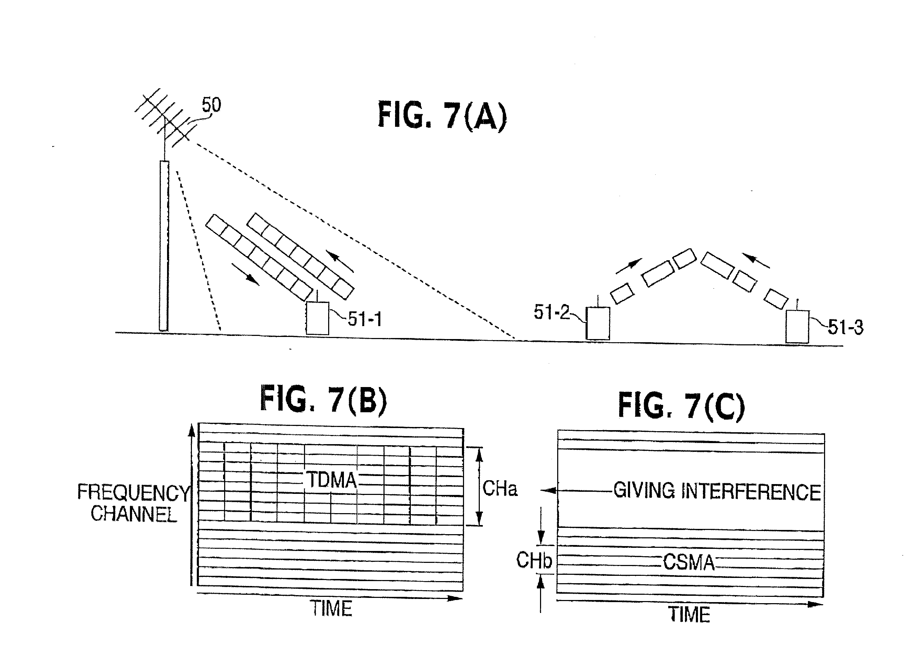

For example, Fig. 7(A) illustrates a positional relationship between a base station 50 and a plurality of mobile stations 51-1, 51-2, and 51-3. Meanwhile, as illustrated in Fig. 7(B), wherein time is plotted on the horizontal axis and frequency channel on the vertical axis, the TDMA system, in which a predetermined frequency band is divided into a plurality of frequency channels and each timing attained by dividing the frequency channel group CHa by the predetermined time width is assigned respectively to the mobile stations, is adapted to radio communications between the base station 50 and mobile station 51-1, having moved into the service area of the base station 50. In addition, as illustrated in Fig. 7(C), the CSMA system, in which the frequency channel group CHb, which is different from the frequency channel group Cha used in the base station 50, is used to select the frequency channel in the frequency channel group CHb, is adapted to radio communications among the mobile stations 51-2 and 51-3, located outside the service area of the base station 50. In this case, for radio communications among the mobile stations, it is desirable, as illustrated in Figs. 7(B) and 7(C), to use the frequency channel group CHb, which does not give any interference on the frequency channel group CHa to be used between the base station 50 and the mobile station 51-1. However, if interference on both sides is small enough to be ignored, the idle frequency channels of the frequency channel groups CHa and CHb may all be used for radio communications.

Moreover, it has also been considered to apply one of the time slots obtained by dividing the identical frequency band on the time axis in part to radio communications between a base station and a mobile station, while also in part to radio communications among the mobile stations. In this case, the frequency channel to be used can also be selected among the mobile stations through application of the CSMA system. Moreover, for radio communications among the mobile stations, which are stopped in an area outside of a service area of the base station or are moving in such an area, the frequency channel can be used effectively by using respective, different time slots.

When many mobile stations are used, a problem arises in that transmission becomes difficult because the probability of carrier detection becomes higher for channel selection through application of the CSMA system. In this case, it has also been considered to increase the number of frequency channels which may be used by the mobile station; however, to do so raises another problem in that there is a limitation on the divisions of the predetermined frequency band, as to a frequency channel giving no mutual interferences, and thereby channel selection becomes difficult.

It is therefore desirable to solve the problems explained above by easily selecting channels for radio communications among mobile stations, and among a base station and mobile stations.

According to an embodiment of the present invention for example, there is provided a mobile radio apparatus for making radio communications between a base station and a plurality of mobile stations and radio communications among mobile stations, in which each mobile station comprises a location information acquiring unit acquiring position information of a present position of the mobile station, a channel assigning unit assigning a frequency channel for radio communications, and a transmitting/receiving unit transmitting and receiving with the frequency channel assigned with the channel assigning unit. The channel assigning unit comprises an assigning unit assigning a frequency channel corresponding to the position information acquired using the position information acquiring unit.

According to another embodiment of the present invention, there is provided a mobile radio apparatus for making radio communications between a base station and a plurality of mobile stations and radio communications among mobile stations, in which each mobile station comprises a position information acquiring unit acquiring position information of a present position of the mobile station, a channel assigning unit assigning a frequency channel for radio communications, and a transmitting/receiving unit for transmission and reception with the frequency channel assigned with the channel assigning unit. The channel assigning unit comprises an assigning unit for assigning a frequency channel with a lower usage rate, based on the channel usage information of another mobile station assigned to a common channel.

According to another embodiment of the present invention, there is provided a mobile radio apparatus for making radio communications between a base station and a plurality of mobile stations, and radio communications among mobile stations, in which each mobile station comprises an position information acquiring unit acquiring position information of a present position of the mobile station, a channel assigning unit assigning a frequency channel used for radio communications, and a transmitting/receiving unit for transmission and reception using the frequency channel assigned by the channel assigning unit. The channel assigning unit comprises an assigning unit updating a frequency channel assignment for distributional use of a plurality of frequency channels on the basis of the channel usage information of another mobile station assigned to a common channel.

According to another embodiment of the present invention, there is provided a mobile radio apparatus for making radio communications between a base station and a plurality mobile stations, and radio communications among mobile stations, in which each mobile station comprises a position information acquiring unit acquiring position information of a present position of the mobile station, a channel assigning unit assigning a frequency channel for radio communications, and a transmitting/receiving unit for transmission and reception using a frequency channel assigned by the channel assigning unit. The channel assigning unit comprises an assigning unit for selecting a frequency channel by sensing a carrier for another frequency channel, selected sequentially or at random when the carrier is detected through carrier sensing.

According to an embodiment of a further aspect of the present invention there is provided a mobile radio channel assigning method for making radio communications between a base station and a plurality of mobile stations and radio communications among the plurality of mobile stations, comprising: selecting the frequency channel, corresponding to position information of a mobile station, on the basis of position information acquired by the mobile station; and transmitting the frequency channel to another mobile station by sensing a carrier for the frequency channel.

When a mobile station is located outside of a service area of the base station, the mobile station cannot be subjected to channel assignment control from the base station, but is requested to self-controllably select a plurality of frequency channels for radio communications among the mobile stations. In this case, a carrier can be sensed easily in the mobile station by previously setting the frequency channel corresponding to the present positional information of the mobile station. Moreover, the efficiency of application of a frequency channel can be improved by selecting the frequency channel on the basis of the usage condition of the frequency channel. In this case, consideration is given to interference of adjacent channels, and distributed assignment of channels is required. As a result, radio communications among the mobile stations can be realized through self-controllable assignment of frequency channels.

Additional aspects and/or advantages of the invention will be set forth in part in the description which follows and, in part, will be apparent from the description, or may be learned by practice of the invention.

These and/or other aspects and advantages of the invention will become apparent and more readily appreciated from the following description of the embodiments, taken in conjunction with the accompanying drawings of which:
Fig. 1 is a diagram of the communications system according to an embodiment of the present invention.
Fig. 2 is a diagram of an example of the relationship between position information and channel according to an embodiment of the present invention.
Figs. 3(a) and 3(b) are a diagrams illustrating change in channel assignment, according to an embodiment of the present invention.
Figs. 4(a) and 4(b) are diagrams illustrating a change in channel assignment, according to an embodiment of the present invention.
Fig. 5 is a diagram of the essential portion of the communication system, according to an embodiment of the present invention.
Figs. 6(A) and 6(B) are diagrams illustrating area groups, according to an embodiment of the present invention.
Figs. 7(A), 7(B) and 7(C) are diagrams illustrating relationships between a base station and a plurality of mobile stations, according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

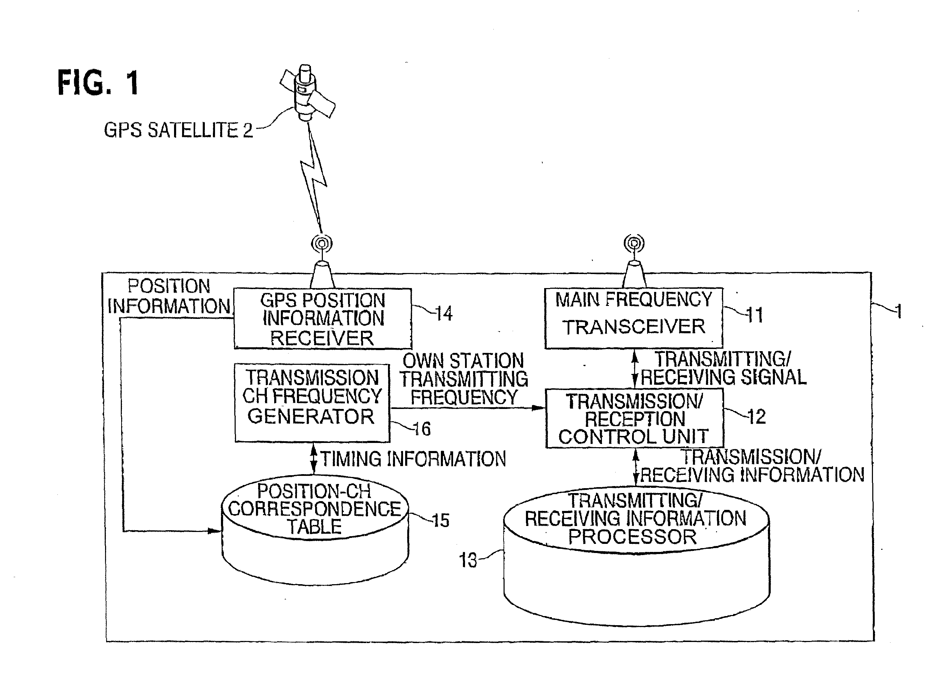

Fig. 1 is a diagram of a mobile station in accordance with the first embodiment of the present invention. A GPS satellite 2 transmits to a mobile station 1, which includes a main frequency transceiver 11, which acts as main information transmitting/receiving means and is controlled by a transmission/reception control unit 12, which acts as transmission/reception control means, while an information processor 13 acts as transmitting/receiving information processing means. The GPS satellite 2 transmits position information of the mobile station 1, received by a GPS position information receiver 14, which acts as GPS position information acquiring means. A position-CH (channel) correspondence table 15 is used to determine a position of the mobile station 1, and frequency generator 16 acts as transmitting CH(channel) frequency generating means that generates a frequency used by mobile station 1. Other mobile stations and a base station are not illustrated.

The GPS position information receiver 14, as position information acquiring means, is capable of acquiring the information of the present position of a mobile station 1, and the GPS position information acquiring receiver 14 can adapt various structures already known. Moreover, it is also possible to obtain the position information of the mobile station, instead of acquiring the position information with the GPS satellite, using the position information of the mobile stations allocated in every predetermined distance along various moving routes thereof and the distance information from the reference point.

Moreover, the position-CH correspondence table 15 stores a preset correspondence relationship between the position information acquired with the GPS position information acquiring receiver 14 and the channel CH. The transmission CH frequency generating unit 16 generates an own-station transmitting frequency, based on the timing signal, corresponding to the channel from the position-CH correspondence table 15, and then applies this own-station transmitting frequency to the transmission/reception control unit 12. With this position-CH correspondence table 15 and the transmission CH frequency generating unit 16, a channel assigning unit is formed.

Moreover, the transmission/reception control unit 12 modulates the transmitting information from the transmitting/receiving information processor 13 with the frequency of the assigned frequency channel and then transmits the modulated signal from the main information transmitting/receiving unit 11. Moreover, the main information transmitting/receiving unit 11 has a structure to receive and transmit information of other mobile stations, belonging to this mobile communication system, and information of the base station, in order to receive the information of another station, demodulate the information in the transmission/reception control unit 12, and transfer the information to the transmitting/receiving information processor 13. The transmitting/receiving information processor 13 includes an input/output unit and a display unit, or the like.

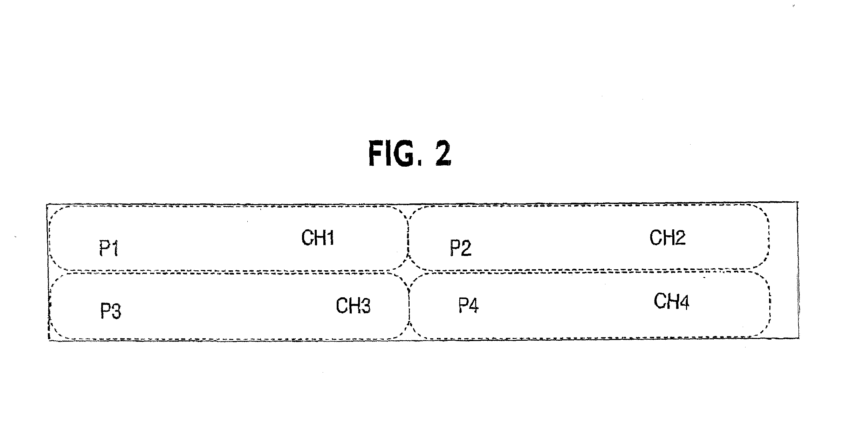

Fig. 2 illustrates an example of a relationship between position information and a channel. The channels CH1, CH2, CH3, CH4, ..... are assigned to the positions P1, P2, P3, P4, ...... and this correspondence is stored in the position-CH correspondence table 15 explained above. The position information in this case can be acquired as geographical areas or as an address, or the like, when the area of each address is wide. Also, position information, such as latitude and longitude determined by the GPS satellite 2, can be used. In the case where a mobile station is on a moving vehicle, such as a train, a predetermined distance can also be acquired as a unit of the position information. When persons carrying mobile stations are gathered in a wide area, such as an event site, it is also possible to assign channels corresponding to the position information indicating each region by dividing the area into a plurality of regions. Moreover, it is also possible to repeatedly provide a correspondence to the channel for a position isolated by a predetermined distance.

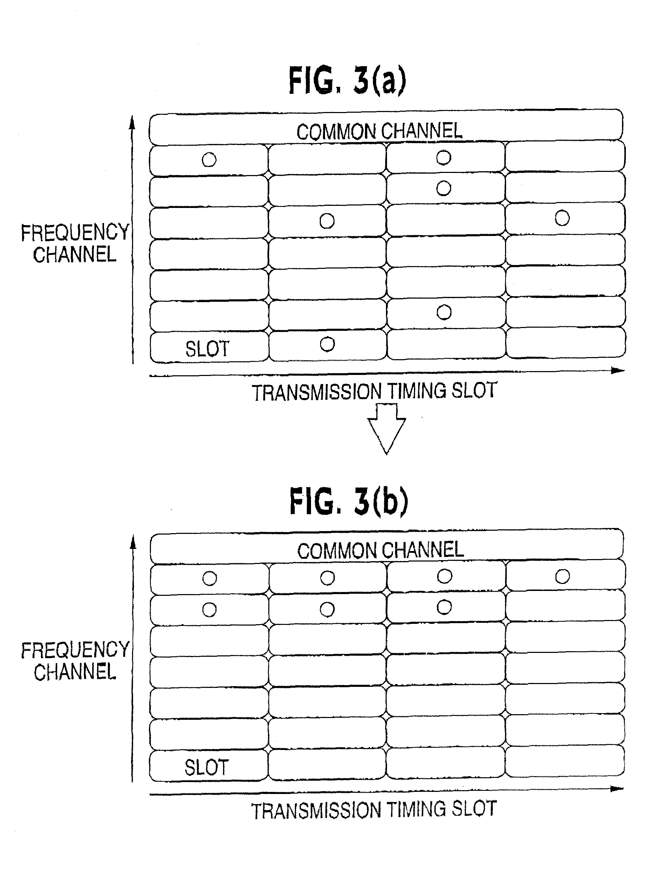

Figs. 3(a) and 3(b) are an explanatory diagrams showing a change in channel assignment, according to an embodiment of the present invention. In this diagram, frequency is plotted on the vertical axis, while time is plotted on the horizontal axis. Moreover, the frequency on the vertical axis is defined as a plurality of frequency channels, while the time on the horizontal axis is defined as a plurality of transmission timing slots and each frequency channel other than the common channel is respectively divided, corresponding to the transmission timing slots, as the channels to be used for transmission by the mobile station. Accordingly, the channel used for transmission can be selected by selecting the frequency channel and also selecting the transmission timing slot. In Fig. 3(a), the channel selected by the mobile station with the CSMA system is given a circular mark.

In regards to the using state of channel in Fig. 3(a), since many frequency channels are used, the mobile station is requested to provide a function to receive all frequency channels. Therefore, the mobile station receives all frequency channels and transfers these channels to the transmitting/receiving information processor 13, when the address of the mobile station is added, or by selectively processing the receiving signal of the channel having a higher receiving level, for example, with the main information transmitting/receiving unit 11 illustrated in Fig. 1. Moreover, with the carrier sensing process, as in the CSMA system, the mobile station has a higher possibility of sensing a carrier, for example, in a state where the distributed frequency channel is used and, therefore, the mobile station requires a longer time for channel selection.

Therefore, the common frequency channel which does not require acquisition of a frequency channel based on the CSMA system is defined as the common channel and the mobile station notifies another mobile station of the channel being used, through the common channel, using an identification number, or the like. Thereby, each mobile station can recognize an idle channel. Accordingly, the mobile station receives the common channel and selects channels not used by the other mobile stations.

For example, when the frequency channel number increases in the vertical direction, the frequency channel is updated to the channel having a larger frequency channel number and the updated channel is notified to another mobile station using the common channel, by utilizing the identification number, or the like, as explained above.

For example, when the channel number of the frequency channel used by the mobile station is small, the common channel is received, an idle channel having the larger frequency channel number is selected, the mobile station channel is updated to this idle channel, and the result is notified to another mobile station through the common channel. Accordingly, the channel assigning state of Fig. 3(a) changes to the channel assigning state which has been self-controllably shifted to the frequency channel in the common channel side, as illustrated in Fig. 3(b). That is, the structure for receiving all channels in the state of Fig. 3(b) can be simplified and power consumption can also be reduced, since less frequency channels are used for receiving all channels in the distributed usage state illustrated in Fig. 3(a). Moreover, the mobile station is capable of self-controllably selecting the particular frequency channel groups. Accordingly, even in the case where the mobile communication system is constituted by a coexistence of the mobile station having a function to receive all frequency channels and the mobile station having a function to receive a smaller number of frequency channels, all mobile stations are capable of realizing radio communications among the mobile stations. In addition, the control explained above may be realized with the processing functions of a processor to control each part of the mobile station.

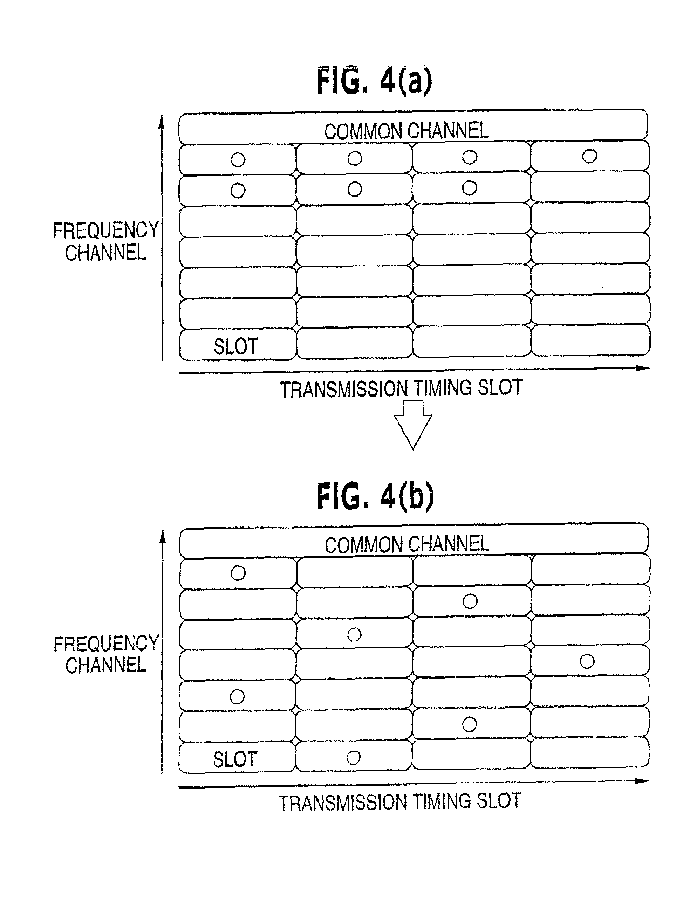

Figs. 4(a) and 4(b) are explanatory diagrams showing a change in channel assignment, according to another embodiment of the present invention, wherein a frequency channel is plotted on the vertical axis and transmission timing slots are plotted on the horizontal axis. In Fig. 4(a), the channels used, indicated with the circular marks, are concentrated to the frequency channel groups in the common channel side, suggesting a lower usage rate of the other frequency channels. This figure shows the merit explained for Fig. 3(b) but also shows the probability for reduction in the throughput due to competition of transmission based on the CSMA system and for generation of interference among adjacent channels. Therefore, if the carrier cannot be detected as a result of sensing the carrier based on the CSMA system corresponding to frequency channels, the channel in such a frequency channel is selected and transmitted. For sensing the carrier, the other frequency channels are selected repeatedly and at random. When the carrier is sensed in each selection, the frequency channel in the last carrier sensed for all frequency channels is selected. With such channel selection by the CSMA system, the average usage rate of a frequency channel can be obtained as illustrated, for example, in Fig. 4(b). When each mobile station sends the identification number of the channel being used or the like to the common channel, each mobile station receives the common channel and updates the identification number by selecting the other channel when it recognizes adjacent channels and then sends the result of the change in the channel to the common channel. This control can be realized with the processing function of a processor for controlling each section of the mobile station.

Another embodiment of the present invention discloses a change in channel assignment based on the usage rate of frequency channels. In this embodiment, the information such as an identification number or the like of the channel used of each mobile station of the common channel explained above is received, the number of mobile stations used is calculated corresponding to each frequency channel, and the frequency channel used by the least number of mobile stations, that is, the lowest usage rate, is selected in order to determine the frequency channel in to be used as the transmission channel. Thereby, average usage rate of frequency channel can be obtained and a probability of competition of transmission by the CSMA system can be lowered. The structure for control explained above can be realized with the processing function of a processor controlling each section of the mobile station.

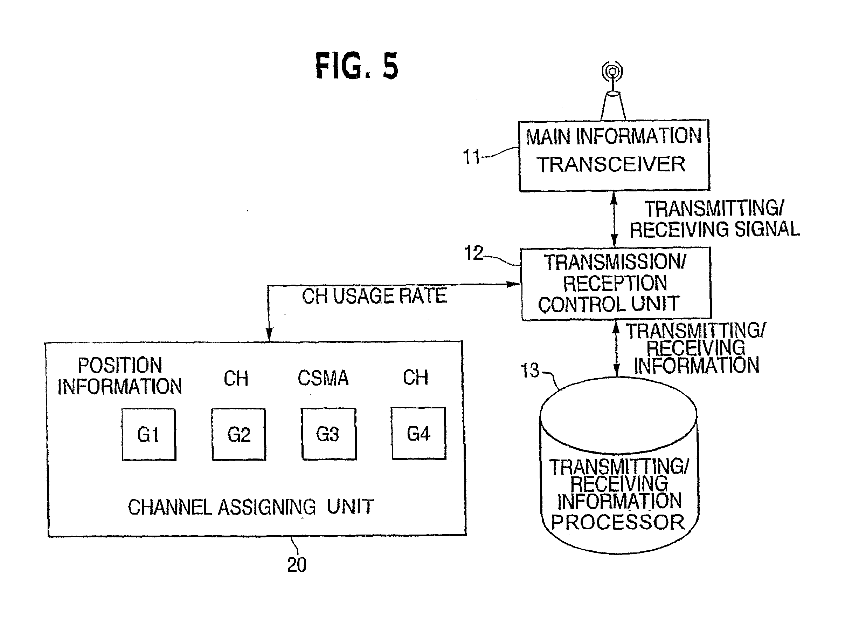

Fig. 5 is an explanatory diagram showing the essential portion of another embodiment of the present invention. Numeral 11 denotes the main information transceiver, which acts as main information transmitting/receiving means and transmits/receives information to/from the transmission/reception controller 12, while a processor 13 acts as transmitting/receiving information processing means. Channel assignment controller 20, which acts as channel assigning means, assigns a frequency channel, using an assigning unit G1, acting as assigning means, assigning a channel on the basis of the position information, an assigning unit G2, acting as assigning means, assigning channel on the basis of the channel usage rate, an assigning unit G3, acting as assigning means, assigning channel with the CSMA system and assigning unit G4, acting as assigning means, obtaining average channel usage rate. This channel assignment control unit 20 can also be realized using the processing function of a processor or the like. Moreover, the assigning units G1, G2, G3, G4 may respectively be operated individually and can also be operated in combination. The GPS position information acquiring unit, position-CH correspondence table, and transmission channel frequency generating unit in Fig. 1 are not illustrated.

The assigning unit G1 assigning a channel on the basis of the position information corresponds to the functions of the position-CH correspondence table 15 and transmission channel frequency generator 16. For example, the assigning unit G1 controllably assigns the channels CH1, CH2, CH3, CH4, etc. used by the mobile station for radio communications corresponding to the position information of P1, P2, P3, P4, etc., for example, indicating a correspondence between the position information obtained by the mobile station and the channel as illustrated in Fig. 2, and then sends the result of the assignment to the transmission/reception control unit 12. In this case, it is also possible to realize control so that the frequency channels illustrated in Figs. 3(a) and 3(b) and Figs. 4(a) and 4(b) are assigned corresponding to the position information, and the channel of the transmission timing slot of a frequency channel is selected.

Moreover, the assigning unit G2 has a function to obtain a channel usage rate based on the notified information of the frequency channel used by each mobile station, obtained through the common channel, as explained above in the description of Figs. 4(a) and 4(b), and to select the channel having a lower usage rate. Moreover, the assigning unit G3 has the function to select a channel through carrier sensing by the CSMA system, which is an already-known control function of the CSMA system. In addition, the assigning unit G4 has a function to assign a channel in accordance with the channel usage rate similar to that of the assigning unit G2.

In addition, a combination of the assigning unit G1 assigning a channel, on the basis of the position information, and the assigning unit G3 selecting a channel by the CSMA system or the assigning unit G4 assigning a channel, on the basis of the channel usage rate, enables the channel assignment control of mobile stations. Moreover, a combination of the assigning unit G2 channel assignment, on the basis of a channel usage rate, and the assigning unit G3, by the CSMA system, also enables the channel assignment control of mobile stations.

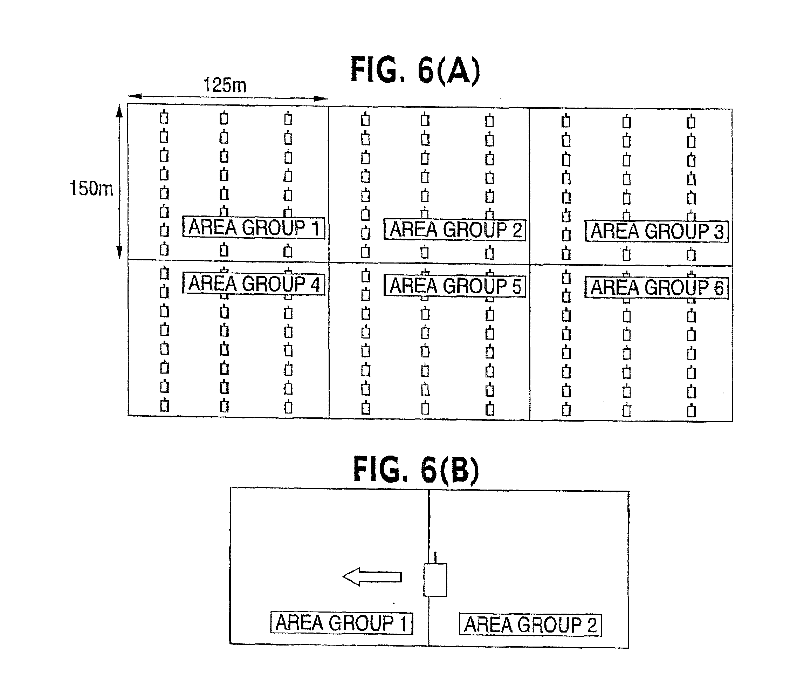

Figs. 6(A) and 6(B) are explanatory diagrams of another embodiment of the present invention. Fig. 6(A) illustrates an example wherein a plurality of mobile stations exist. When it is possible to obtain the position information from the GPS satellites, each mobile station is grouped into the area groups 1, 2, 3, 4, etc., for every predetermined range of the position information. As the pre-conditions, all transmitting packets of the mobile station are considered identical, a sum of a transmitting packet length unit and a time length required for carrier sensing is defined as one slot, and sensing and transmission of a carrier are executed in units of slots,

First, the smallest digit, 0 to 4, in the second of the latitude and longitude information of the position information acquired from the GPS satellite is defined as 0, while the smallest digit, 5 to 9, of the same is defined as 5. This may be indicated, for example, as P1 a (latitude) and P1 b (longitude). When the actual latitude is 36°00'11", P1a is indicated as 36°00'10". When the actual longitude is 138°59'47", P1 b is indicates as 138°59'45".

Moreover, the position information based on the latitude and longitude can be expressed as follows in terms of distance. Since, 5 seconds of latitude is about 150 m and 10 seconds of longitude is about 125 m, a sum in units of seconds of P1 a and P1 b of the position information obtained is divided by 5 to obtain the quotient A. The lower two digits, for example, of the ID information of a mobile station is added to this quotient A. The result of the addition is defined as B.

In the case of the latitude and longitude information of the position information explained above, the quotient A becomes (10+45)/5 = 11, while the result of addition B becomes 11+5=16, when the ID of the mobile station is 8005. Such arithmetic process is executed whenever the position information is acquired. For example, such a process can be executed using the arithmetic processing function of the GPS position information acquiring unit 14 of Fig. 1. In addition, a value of the result of addition B is defined as carrier sense timing.
Accordingly, the area groups 1, 2, 3, 4, ...... can be respectively obtained through the grouping in the area of 150m × 125m, as shown in Fig. 6(A). For the mobile stations in the same area group, the lower two digits of respective IDs are added and therefore the result of addition B may be different from each other.

For example, when B is equal to 16 (B=16), the carrier of the transmission slot No. 16 is sensed for execution of the packet transmission. When the transmission period is 100ms and the slot length is 1ms, the packet slot 100 can be obtained. Since result of addition B is equal to 16, the carrier is sensed in the timing of 16ms of the communication frame. In this case, since the mobile station, which is trying to conduct packet transmission at the same time, does not exist at a high probability in the area group of 150m × 125m, the packet transmission rate can be improved. Moreover, the values of quotient A and addition result B explained above vary in accordance with movement of mobile stations, and the timing of carrier sensing corresponding to the mobile station is different. Thereby collision of transmission never occurs in the area group of 150m × 125m.

Moreover, when a mobile station moves to area group 1 from area group 2, as illustrated in Fig. 6(B), the value of quotient A explained above changes and thereby the value of addition result B also varies. In this case, packet transmission, which has been executed in the area group 2, is stopped in order to provide the timing for sensing of a carrier based on the value of the newly obtained addition result B. Thereby, it is possible to realize sensing of a carrier in the timing, without resulting in a collision of the carrier sensing in the other mobile stations, even in the area group into which the mobile station moves.

In the above explanation, the transmission period is set to 100 ms. However, the mobile station can execute carrier sensing in accordance with the area grouping explained above by switching, for example, every 50 ms the packet transmission/reception between the base station and mobile station and the packet transmission among the mobile stations. In addition, it is also possible that the range of area grouping is expanded more than that explained above, the ID of the mobile station is used up to three digits, and the lower third digit is used for assignment in the frequency direction.

Although a few embodiments of the present invention have been shown and described, it would be appreciated by those skilled in the art that changes may be made in these embodiments without departing from the principles and spirit of the invention, the scope of which is defined in the claims and their equivalents.

This application is related to and claims priority to Japanese Application No. 2005-356273 filed December 9, 2005 in the Japanese Patent Office, the contents of which are incorporated by reference herein.

## Claims

1. A mobile radio apparatus for establishing radio communications between a base station and a plurality of mobile stations and radio communications among the plurality of mobile stations, each of said plurality of mobile stations comprising:
location information acquiring means for acquiring position information of a current position of the mobile station;
channel assigning means for assigning a frequency channel for radio communications; and
transmitting/receiving means for transmitting and receiving information with the frequency channel assigned with said channel assigning means, wherein
said channel assigning means assigns the frequency channel corresponding to the position information acquired with said position information acquiring means.

2. A mobile radio apparatus for establishing radio communications between a base station and a plurality of mobile stations and radio communications among the plurality of mobile stations, each of said plurality of mobile stations comprising:
position information acquiring means for acquiring position information of a current position of the mobile station;
channel assigning means for assigning a frequency channel for radio communications; and
transmitting/receiving means for transmitting and receiving information with the frequency channel assigned with said channel assigning means, wherein
said channel assigning means assigns a frequency channel of a lowest usage rate, with respect to channel usage information of other of the plurality of mobile stations.

3. A mobile radio apparatus for establishing radio communication between a base station and a plurality of mobile stations and radio communication among the plurality of mobile stations, each of said plurality of mobile stations comprising:
position information acquiring means for acquiring position information of a current position of the mobile station;
channel assigning means for assigning a frequency channel used for radio communication; and
transmitting/receiving means for transmitting and receiving information with a frequency channel assigned with said channel assigning means, wherein
said channel assigning means updates the frequency channel assignment for distributional use of a plurality of frequency channels on a basis of channel usage information of other of the plurality of mobile stations.

4. A mobile radio apparatus for establishing radio communication between a base station and a plurality mobile stations and radio communication among the plurality of mobile stations, said plurality of mobile stations comprising:
position information acquiring means for acquiring position information of a current position of the mobile station;
channel assigning means for assigning a frequency channel for radio communications;
a transmitting/receiving means for transmitting and receiving information with a frequency channel assigned with said channel assigning means, wherein
said channel assigning means selects the frequency channel by sensing the carrier for another frequency channel selected sequentially or at random.

5. A mobile radio channel assigning method for establishing radio communications between a base station and a plurality of mobile stations and radio communication among the plurality of mobile stations with channel assignment, comprising:
sensing a carrier for a frequency channel;
setting another frequency channel, corresponding to position information acquired by a mobile station; and
transmitting the set frequency channel to another of the plurality of mobile stations.

6. The method according to claim 5, wherein the transmitting to the other of the plurality of mobile stations is via a common channel used by all of the plurality of mobile stations.

7. The method according to claim 5 or 6, further comprising:
selecting the frequency channel, set by the setting, with a lowest usage rate on the basis of channel usage information of another of the plurality of mobile stations.

8. The method according to claim 7, further comprising:
changing the set frequency channel to a plurality of frequency channels on the basis of the channel usage information of the other of the plurality of mobile stations.

9. The method according to any one of claims 2 to 8, wherein the channel usage information of the other of the plurality of mobile stations is notified to a mobile station via a common channel used by all of the plurality of mobile stations.

10. The method according to claim 5, 6, 7 or 8 or claim 9 when read as appended to claim 5, wherein a predetermined range is divided into area groups on the basis of the position information, and the set frequency channel and timing of carrier sensing are assigned in accordance with a combination of a part of the position information and a part of identification information of a mobile station.

11. A mobile radio channel assigning method for establishing radio communications between a base station and a plurality of mobile stations and radio communication among the plurality of mobile stations with channel assignment, comprising:
acquiring position information of a current position of a mobile station;
assigning a frequency channel for radio communications; and
transmitting and receiving information over the assigned frequency channel, wherein
the assigned frequency channel corresponds to the acquired position information.

12. The method according to claim 11, wherein the assigned frequency channel is transmitted to other of the plurality of mobile stations via a common channel used by all of the plurality of mobile stations.

13. An apparatus for assigning a mobile radio channel for establishing radio communications between a base station and a plurality of mobile stations and radio communication among the plurality of mobile stations with channel assignment, comprising:
a receiver acquiring position information of a current position of a mobile station;
a frequency channel assigning unit assigning a frequency channel for radio communications; and
a transceiver transmitting and receiving information over the assigned frequency channel, wherein
the assigned frequency channel corresponds to the acquired position information of the mobile station.

14. An apparatus for assigning a mobile radio channel for establishing radio communications between a base station and a plurality of mobile stations and radio communication among the plurality of mobile stations with channel assignment, comprising:
a carrier sensor sensing a carrier for a frequency channel, sequentially or at random;
a frequency channel setting unit setting another frequency channel, corresponding to position information acquired by a mobile station; and
a transmitter transmitting the set frequency channel to another of the plurality of mobile stations.

15. A mobile radio system for establishing radio communications between a base station and a plurality of mobile stations and radio communications among the plurality of mobile stations, said system comprising:
acquiring position information of a current position of the mobile station;
assigning a frequency channel for radio communications; and
transmitting and receiving information with the assigned frequency channel, wherein
said assigning assigns the frequency channel corresponding to the acquired position information.
